Europäisches Patentamt

European Patent Office

Office européen des brevets

(19)

(11) **EP 1 368 204 B1**

(12) **FASCICULE DE BREVET EUROPEEN**

(45) Date de publication et mention
de la délivrance du brevet:
**18.05.2005 Bulletin 2005/20**

(21) Numéro de dépôt: **02704727.3**

(22) Date de dépôt: **01.03.2002**

(51) Int Cl.⁷: **B60C 23/04**

(86) Numéro de dépôt international:
**PCT/EP2002/002237**

(87) Numéro de publication internationale:
**WO 2002/072369 (19.09.2002 Gazette 2002/38)**

(54) **PROCEDE DE LOCALISATION AUTOMATIQUE DES ROUES AVANT ET ARRIERE D'UN VEHICLE AUTOMOBILE**

VERFAHREN ZUR AUTOMATISCHEN ORTUNG DER VOR- UND HINTERRÄDER EINES KRAFTFAHRZEUGES

METHOD FOR AUTOMATICALLY DETERMINING THE POSITION OF THE FRONT AND REAR WHEELS OF A MOTOR VEHICLE

(84) Etats contractants désignés:
**DE ES GB IT**

(30) Priorité: **13.03.2001 FR 0103410**

(43) Date de publication de la demande:
**10.12.2003 Bulletin 2003/50**

(73) Titulaires:
• **Siemens VDO Automotive S.A.S.
31036 Toulouse Cédex 01 (FR)**
• **SIEMENS AKTIENGESELLSCHAFT
80333 München (DE)**

(72) Inventeurs:
• **BRILLON, Alain
F-31270 Villeneuve Tolosane (FR)**
• **FONZES, Georges
F-06600 Antibes (FR)**
• **GOESER, Gerhard
Bloomfield Hill, MI 48301 (DE)**
• **LEFAURE, Philippe
F-31450 Montbrun Lauragais (FR)**

(56) Documents cités:
**US-A- 5 808 190          US-A- 6 018 993**

## Description

La présente invention concerne un procédé de localisation automatique des roues d'un véhicule automobile. Plus particulièrement. mais pas exclusivement, un tel procédé est associé à un système de surveillance de la pression des pneus.

En effet, il est déjà connu de surveiller en permanence la pression régnant à l'intérieur des pneumatiques d'un véhicule. Ces mesures de pression (éventuellement corrigées en fonction de la température et du vieillissement du pneu ou de tout autre paramètre) sont traitées par un calculateur. Un signal d'alarme est émis lorsque la pression d'un pneu est anormale. Le calculateur traitant les mesures de pression peut être implanté sur la roue elle-même ou en tout endroit approprié du véhicule.

Les mesures de pression sont réalisées par un capteur spécifique associé à chacune des roues. Ce capteur envoie, vers un calculateur distant, la mesure de pression associée à un code identifiant du capteur. Bien entendu, il est nécessaire que le calculateur sache attribuer à ce code identifiant une position sur le véhicule. Ainsi, après traitement le calculateur doit être capable de dire que la mesure de pression associée au code identifiant X provient de la roue avant droite (par exemple). Pour cela, il est nécessaire d'apprendre, au calculateur, la position du capteur et son code identifiant.

Cet apprentissage peut être effectué manuellement. Par exempte, le calculateur est placé en mode apprentissage et demande les codes de chacun des capteurs de pression dans un ordre préétabli. Ce procédé d'apprentissage est cependant relativement lent et doit, en outre, être répété à chaque changement de pneu. Il présente l'inconvénient d'obliger le conducteur à entrer des données dans le calculateur du véhicule. Si le conducteur oublie de mémoriser le nouveau code après un changement de pneu, il y a risque d'erreur sur la position d'une roue présentant une pression anormale. Ceci peut avoir de graves conséquences.

Il est apparu opportun de réaliser cet apprentissage, de manière automatique, pendant le déplacement du véhicule. Il est notamment déjà connu de corréler un signal radio-fréquence reçu des capteurs avec une position de roue, ou encore de positionner près de chaque roue des antennes basse-fréquence / radio-fréquence qui, par une communication bidirectionnelle, permettent d'identifier la position des roues...

Cependant, ces différents apprentissages automatiques de la position des roues présentent l'inconvénient de nécessiter la mise en place d'une architecture complexe et onéreuse (antennes près des roues, communication bidirectionnelle) ou des traitements mathématiques très compliqués et difficiles à rendre fiables (corrélation entre puissance du signal radio-fréquence et la position de la roue).

Un tel procédé est connu par exemple du US-A-6 018 993.

La présente invention a pour but de réaliser une corrélation entre l'identifiant d'un capteur et sa position sur le véhicule, de manière automatique, simple et fiable.

A cet effet, la présente invention concerne un procédé de localisation automatique des roues d'un véhicule automobile, caractérisé en ce qu'il consiste à:

- mesurer la température de chaque roue du véhicule, et
- déterminer la position des roues sur le véhicule en fonction de la température mesurée.

Ainsi, la position d'un capteur sur un véhicule est détectée simplement en fonction de la température (et / ou de l'évolution de la température) qu'il mesure. En effet, par exemple, dans le cas d'un véhicule à traction avant, on s'est aperçu que les roues avant soit s'échauffent beaucoup plus rapidement que les roues arrières, soit présentent des variations de température plus importantes.

Avantageusement, les variations de températures les plus rapides sont attribuées aux roues situées sur l'essieu avant

Cependant, le procédé selon l'invention n'est pas limité à la détermination de la position des roues avant et arrière. En effet, il est également possible de déterminer la position des roues gauches et droites de la même manière.

D'autres objets, caractéristiques et avantages ressortiront de la description qui suit, à titre d'exemple non limitatif et en référence aux dessins annexés dans lesquels :

La figure 1 est une vue schématique montrant le positionnement des éléments du dispositif selon l'invention sur un véhicule automobile,
La figure 2 est un diagramme schématique montrant révolution des températures dans les pneumatiques en fonction de leur position sur le véhicule, et
La figure 3 est un logigramme représentant le procédé selon la présente invention.

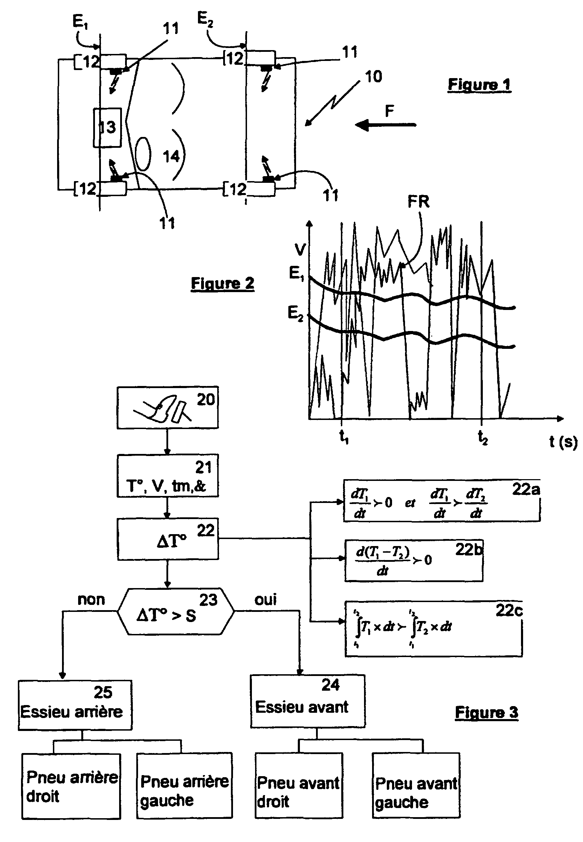

Selon la forme de réalisation représentée à la figure 1, un véhicule automobile 10, se déplaçant dans le sens de la flèche F (figure 1), est muni d'un système de surveillance de la pression des pneus 12. A cet effet, chaque pneu 12 est muni d'un capteur de pression 11, adapté pour émettre un message vers une unité de calcul 13. Ce message comporte d'une part un code identifiant le capteur 11 et d'autre part une série de données, par exemple des mesures de pression et de température.

L'essieu avant du véhicule est référencé E1 (figure 1) et l'essieu arrière E2.

L'unité de calcul 13 analyse les données reçues et détermine si la pression est normale ou non. Si la pression est anormale un signal d'alarme est émis vers le conducteur 14. L'unité de calcul détermine également la position de la roue sur le véhicule en fonction du code identifiant du capteur de température ayant émis le message.

Bien entendu, pour que l'unité de calcul puisse associer une position sur le véhicule à un code identifiant de capteur, il faut que cette association lui ait été enseignée.

Dans le cadre de la présente invention cette association code identifiant / position du capteur sur le véhicule est réalisée de manière automatique, par exemple, à chaque démarrage du véhicule.

A cet effet, on s'est aperçu (figure 2) que la température de chaque pneu différait en fonction de sa position sur le véhicule. Notamment par exemple, lors d'un freinage FR, pour un véhicule à traction avant se déplaçant à vitesse stabilisée, les roues avant E1 présentent une élévation de température (moyenne de la température des roues avant) plus importante que les roues arrière E2 (moyenne de la température des roues arrière). En effet, une des sources de chaleur du pneumatique est la jante. La température du pneu dépend donc de la variation de la température sur la jante. Or, lors d'un freinage, l'échauffement des jantes dû au frottement des freins sera plus élevé à l'avant qu'à l'arrière. Par conséquent en cas de freinage, les pneus avant vont être soumis à une élévation de température plus importante que les pneus arrière. L'utilisation de cette information nous permet d'identifier les pneus du train avant de ceux du train arrière.

En l'absence de freinage, la source principale d'échauffement des pneumatiques est la transmission du couple moteur à la route. De ce fait, le train de pneus s'échauffant le plus est le train moteur.

Il en est de même pour les pneus droits et gauches qui subissent en virage des élévations de température différentes.

Le procédé selon l'invention (figure 3) consiste à :

a) détecter l'occurrence d'un freinage 20. Ce freinage ( schématisé par le pied du conducteur 14 appuyant sur une pédale de frein) est une des données fournies de manière habituelle à l'unité de calcul 13,

b) mesurer 21 la température régnant dans chacun des pneus, la vitesse V de déplacement du véhicule, l'angle volant $\alpha$ et tenir compte du type de train moteur tm (avant ou arrière),

c) déterminer 22 la variation de température $\Delta T°$ entre deux instants $t_1$ et $t_2$ (figure 2),

d) si la variation de température $\Delta T°$ excède 23 un certain seuil S, alors la température mesurée correspond à un pneu avant 24, sinon elle correspond à un pneu arrière 25.

La variation de température $\Delta t°$ entre deux instants $t_1$ et $t_2$ peut être déterminée de plusieurs façons. Par exemple il est possible d'effectuer :

- une comparaison des dérivées du type : $\frac{dT_1}{dt} > 0$ et $\frac{dT_1}{dt} > \frac{dT_2}{dt}$ $T_1$ étant la température régnant à l'instant $t_1$ et $T_2$ la température à l'instant $t_2$, dans un même pneu,

- ou bien une comparaison de l'écart du type :

$$\frac{d(T_1\text{-}T_2)}{dt} > 0$$

- ou encore une comparaison des intégrales du type :

$$\int_{t_1}^{t_2} T_1 \times dt > \int_{t_1}^{t_2} T_2 \times dt$$

- ou encore une comparaison des valeurs du type $T_1 > T_2$.

Quelle que soit la méthode de détermination utilisée, si la variation de température déterminée est supérieure à un seuil S, les roues correspondantes sont les roues avant (pour une traction avant) et vice versa pour une traction arrière. Ce seuil S est déterminé au banc d'essai pour chaque type de véhicule.

Lorsque la vitesse du véhicule est stabilisée, les valeurs de températures les plus élevées, sont en effet considérées comme appartenant à un même essieu. Si le véhicule est une traction avant cet essieu est l'essieu avant $E_1$.

De même les capteurs mesurant les variations de températures les plus rapides sont considérés comme appartenant à un même essieu (essieu avant).

Dans l'exemple décrit, le procédé selon l'invention permet également de déterminer la position des roues droites et gauches. En effet, les roues droites et gauches présentent des températures différentes, par exemple en virage. En connaissant le sens de rotation du virage (angle volant par exemple), il est alors possible de déterminer la position des roues droites et gauches. En faisant une analyse des angles de volant $\alpha$, en cas d'angle majoritairement d'un côté (vers la gauche par exemple à cause des ronds points), on détecte une élévation de température dissymétrique entre le côté droit et de côté gauche.

Le procédé selon l'invention consiste donc à réaliser une localisation avant / arrière et une localisation droite / gauche des roues d'un même essieu en combinant une analyse des angles du volant a et les évolutions de la température. Ainsi, la localisation de chacun des pneus du véhicule est réalisée.

Le procédé selon l'invention est mis en oeuvre de manière automatique à chaque démarrage. Dès, que la position des capteurs est acquise avec certitude, le procédé de localisation selon l'invention est interrompu.

Il est également possible de prévoir qu'après une temporisation déterminée (par exemple 15 mn) le procédé selon l'invention soit interrompu et qu'il soit attribué une position à chaque capteur sur le véhicule.

La présente invention concerne également un dispositif de localisation automatique des roues d'un véhicule automobile 10 du type comportant une pluralité de capteurs de pression 11, placé chacun sur une roue 12 du véhicule et émettant vers une unité centrale de calcul 13 les valeurs de pression mesurées dans chaque roue ainsi qu'un identifiant propre à chaque capteur. Ces capteurs de pression mesurent également la température T régnant dans chacune des roues et transmettent les valeurs mesurées à l'unité centrale 13. L'unité centrale étant adaptée pour déterminer l'emplacement de chacune des roues en fonction des températures mesurées.

Bien entendu, la présente invention n'est pas limitée au mode de réalisation ci-dessus décrit. Ainsi, le procédé selon l'invention peut être mis en oeuvre lorsque le véhicule a déjà parcouru une certaine distance (ou après une temporisation) afin d'attendre que les différences de températures entre roues avant et arrière (ou droite et gauche) soient bien établies.

**Revendications**

1. Procédé de localisation automatique des roues (12) d'un véhicule automobile (10), **caractérisé en ce qu'**il consiste à :

   - mesurer (21) la température de chaque roue du véhicule, et
   - déterminer (23) la position des roues sur le véhicule en fonction de la température mesurée.

2. Procédé de localisation automatique selon la revendication 1, **caractérisé en ce que** la température est mesurée à l'aide de capteur 11 et **en ce que** lorsque la vitesse du véhicule est stabilisée les capteurs de température (11) mesurant les valeurs de température les plus élevées sont considérés comme appartenant à un même essieu du véhicule.

3. Procédé selon la revendication 2, **caractérisé en ce que** lorsque le véhicule est une traction avant, les capteurs mesurant les températures les plus élevées sont identifiés comme appartenant à l'essieu avant E1.

4. Procédé de localisation automatique selon la revendication 1, **caractérisé en ce que** la température est mesurée à l'aide de capteur 11 et **en ce que** les capteurs de températures (11) mesurant les variations de températures les plus rapides sont identifiés comme appartenant à un même essieu.

5. Procédé selon la revendication 4, **caractérisé en ce qu'**après un freinage prolongé, les capteurs mesurant les variations de températures les plus rapides sont identifiés comme appartenant à l'essieu avant.

6. Procédé de localisation automatique selon la revendication 1, **caractérisé en ce que** la variation de température ($\Delta T°$) est établie par comparaison des dérivées (22a) de la température mesurée pour chacune des roues et / ou par comparaison de l'écart (22b) des températures mesurées pour chacune des roues et/ou par comparaison de l'intégrale temporelle (22c) des températures mesurées pour chacune des roues

7. Procédé selon l'une quelconque des revendications 1 à 6, **caractérisé en ce qu'**il consiste à réaliser une localisation avant / arrière et une localisation droite / gauche des roues d'un même essieu en combinant une analyse des angles du volant et les évolutions de la température.

8. Procédé selon l'une quelconque des revendications précédentes **caractérisé en ce qu'**il est mis en oeuvre de manière continu, à chaque démarrage du véhicule.

9. Procédé selon l'une quelconque des revendications 1 à 7, **caractérisé en ce qu'**après écoulement d'une temporisation déterminée on interrompt les mesures de températures et on attribue à chaque capteur une position sur le véhicule.

10. Dispositif de localisation automatique des roues (12) d'un véhicule automobile du type comportant une pluralité de capteurs de pression (11), placé chacun sur une roue (12) du véhicule et émettant vers une unité centrale de calcul (13) les valeurs de pression mesurées dans chaque roue ainsi qu'un identifiant propre à chaque capteur, les capteurs de pression (11) mesurant également la température (T) régnant dans chacune des roues et transmettant les valeurs mesurées à l'unité centrale (13), le dit dispositif étant **caractérisé en ce que** la dite unité centrale est adaptée pour déterminer l'emplacement de chacune des roues en fonction des températures mesurées.

**Patentansprüche**

1. Verfahren zur automatischen Ortung der Räder (12) eines Kraftfahrzeugs (10), wobei das Verfahren **dadurch gekennzeichnet ist, dass** es folgende Schritte umfasst:

- Messen (21) der Temperatur jedes Rades des Fahrzeugs, und

- Bestimmen (23) der Position der Räder am Fahrzeug in Abhängigkeit von der gemessenen Temperatur.

2. Verfahren zur automatischen Ortung nach Anspruch 1, **dadurch gekennzeichnet, dass** die Temperatur mithilfe des Sensors (11) gemessen wird und dass, wenn die Geschwindigkeit des Fahrzeugs gleichbleibend ist, die Temperatursensoren (11), die die höchsten Temperaturwerte messen, als der gleichen Achse des Fahrzeugs zugehörig angesehen werden.

3. Verfahren nach Anspruch 2, **dadurch gekennzeichnet, dass** bei einem Fahrzeug mit Vorderradantrieb die Sensoren, die die höchsten Temperaturen messen, als der Vorderachse $E_1$ zugehörig identifiziert werden.

4. Verfahren zur automatischen Ortung nach Anspruch 2, **dadurch gekennzeichnet, dass** die Temperatur mit Hilfe von Sensoren (11) gemessen wird, und dadurch, dass die Temperatursensoren (11), die die schnellsten Temperaturänderungen messen, als der gleichen Achse zugehörig identifiziert werden.

5. Verfahren nach Anspruch 4, **dadurch gekennzeichnet, dass** nach einem längeren Bremsvorgang die Sensoren, die die schnellsten Temperaturänderungen messen, als der Vorderachse zugehörig identifiziert werden.

6. Verfahren zur automatischen Ortung nach Anspruch 1, **dadurch gekennzeichnet, dass** die Temperaturänderung ($\Delta T°$) durch Vergleich der Ableitungen (22a) der Temperaturen, die für jedes Rad gemessen wurden, und/oder durch den Vergleich der Abweichung (22b) der Temperaturen, die für jedes Rad gemessen wurden, und/oder durch den Vergleich des Zeitintegrals (22c) der Temperaturen, die für jedes Rad gemessen wurden, bestimmt wird.

7. Verfahren nach einem der Ansprüche 1 bis 6, **dadurch gekennzeichnet, dass** eine Ortung vorne / hinten und eine Ortung rechts / links der Räder einer Achse durchgeführt wird, indem eine Analyse der Winkel der Lenkradstellung mit den Temperaturveränderungen kombiniert wird.

8. Verfahren nach einem der vorgehenden Ansprüche, **dadurch gekennzeichnet, dass** es bei jedem Startvorgang des Fahrzeugs kontinuierlich durchgeführt wird.

9. Verfahren nach einem der Ansprüche 1 bis 7, **dadurch gekennzeichnet, dass** nach dem Ablauf einer bestimmten Verzögerung die Temperaturmessungen unterbrochen werden und jedem Sensor eine Position am Fahrzeug zugeordnet wird.

10. Automatische Ortungsvorrichtung für die Räder (12) eines Kraftfahrzeugs, die mehrere Drucksensoren (11) umfasst, die jeweils an einem Rad (12) des Fahrzeugs angebracht sind und an eine zentrale Rechnereinheit (13) Druckmesswerte, die in den einzelnen Rädern gemessen worden sind, sowie einen Identifizierungscode für jeden Sensor ausgeben, wobei die Drucksensoren (11) ebenfalls die Temperatur (T) messen, die in den einzelnen Rädern herrscht, und die Werte an die Zentraleinheit (13) senden, wobei diese Vorrichtung **dadurch gekennzeichnet ist, dass** die Zentraleinheit dazu in der Lage ist, die Position jedes Rades in Abhängigkeit von den gemessenen Temperaturen zu bestimmen.

**Claims**

1. Method for automatically determining the position of the wheels (12) of a motor vehicle (10), **characterised in that** it consists in:

- measuring (21) the temperature of each wheel of the vehicle, and
- determining (23) the position of the wheels on the vehicle as a function of the measured temperature.

2. Method for automatically determining the position according to Claim 1, **characterised in that** the temperature is measured with the aid of sensors 11 and **in that** when the speed of the vehicle is stabilised, the temperature sensors (11) measuring the highest temperature values are regarded as belonging to the same axle of the vehicle.

3. Method according to Claim 2, **characterised in that** when the vehicle is a front wheel drive, the sensors measuring the highest temperatures are identified as belonging to the front axle E1.

4. Method for automatically determining position according to Claim 1, **characterised in that** the temperature is measured with the aid of sensors 11 and **in that** the temperature sensors (11) measuring the most rapid temperature variations are identified as belonging to the same axle.

5. Method according to Claim 4, **characterised in that** following prolonged braking, the sensors measuring the most rapid temperature variations are identified as belonging to the front axle.

6. Method for automatically determining position according to Claim 1, **characterised in that** the temperature variation ($\Delta T°$) is established by comparing the derivatives (22a) of the temperature measured for each of the wheels and/or by comparing the deviation (22b) of the temperatures measured for each of the wheels and/or by comparing the time integral (22c) of the temperatures measured for each of the wheels.

7. Method according to any of Claims 1 to 6, **characterised in that** it consists in performing a front / rear position determination and a right / left position determination for the wheels on the same axle by combining an analysis of the angles of the steering wheel and the changes in the temperature.

8. Method according to any of the foregoing claims, **characterised in that** it is activated in a continuous manner, at each startup of the vehicle.

9. Method according to any of Claims 1 to 7, **characterised in that** following the expiry of a defined time delay, the temperature measurements are interrupted and a position on the vehicle is attributed to each sensor.

10. Device for automatically determining the position of the wheels (12) of a motor vehicle of the type including a plurality of pressure sensors (11), each placed on a wheel (12) of the vehicle and sending to a central processing unit (13) the pressure values measured in each wheel together with an identifier belonging to each sensor, the pressure sensors (11) also measuring the temperature (T) applying in each of the wheels and transmitting the measured values to the central unit (13), the said device being **characterised in that** the said central unit is adapted for determining the position of each of the wheels as a function of the temperatures measured.

$E_1$  11  $E_2$

[12  11

10

**Figure 1**

13

14

F

FR

V

$E_1$

$E_2$

**Figure 2**

$t_1$  $t_2$  t (s)

20

21
T°, V, tm,&

$$\frac{dT_1}{dt} \succ 0 \quad et \quad \frac{dT_1}{dt} \succ \frac{dT_2}{dt} \qquad \text{22a}$$

ΔT°  22

$$\frac{d(T_1 - T_2)}{dt} \succ 0 \qquad \text{22b}$$

non          23          oui
ΔT° > S

$$\int_{t_1}^{t_2} T_1 \times dt \succ \int_{t_1}^{t_2} T_2 \times dt \qquad \text{22c}$$

25
Essieu arrière

24
Essieu avant

**Figure 3**

Pneu arrière droit

Pneu arrière gauche

Pneu avant droit

Pneu avant gauche